# EUROPEAN PATENT APPLICATION

(11) **EP 4 804 184 A1**
(43) Date of publication of application: **09.09.2026**
(21) Application number: 24884491.2
(22) Date of filing: 21.10.2024
(51) Int. Cl.: G10L 17/22, H04N 21/431

(54) **METHOD AND APPARATUS FOR VIEWING MEDIA CONTENT, DEVICE AND STORAGE MEDIUM**

(30) Priority: 30.10.2023 CN 202311425045
(71) Applicant: Beijing Zitiao Network Technology Co., Ltd., Beijing 100190 (CN)
(72) Inventor: WANG, Juan, Beijing 100028 (CN); LIN, Zekun, Beijing 100028 (CN); XIE, Qinglin, Beijing 100028 (CN); LU, Shuhan, Beijing 100028 (CN)
(74) Representative: Grünecker Patent- und Rechtsanwälte PartG mbB
(86) International application number: PCT/CN2024/126190
(87) International publication number: WO 2025/092487

(57) **Abstract**

Embodiments of the disclosure provide a method, an apparatus, a device, and a storage medium for viewing media content. The method includes: presenting, in a viewing interface of the media content, speaking time information of one or more speaking parties associated with the media content, the speaking time information indicating positions of speaking time periods of the one or more speaking parties in the media content. The method further includes: presenting, in the viewing interface, speaking content information related to speaking content of the one or more speaking parties in association with the speaking time information. In this way, the speaking time and the speaking summary of the speaking party are presented to the user at the same time, which may advantageously improve the efficiency of viewing the media content.

## Description

The present application claims priority to Chinese Patent Application No. 2023114250459, filed on October 30, 2023, and entitled "METHOD, APPARATUS, DEVICE, AND STORAGE MEDIUM FOR VIEWING MEDIA CONTENT", the entire content of which is incorporated herein by reference.

### FIELD

Example embodiments of the present disclosure generally relate to the field of computers, and in particular, to a method, an apparatus, a device, and a computer-readable storage medium for viewing media content.

### BACKGROUND

With the development of computer technologies, the Internet has become a major platform for people to obtain and share content. For example, people may use the Internet to post various types of content or receive content shared by other users. In Internet-based content sharing, sharing of media content (for example, audio or video) has become one of the most important forms. For example, people may play, with a player, a speech or a video or audio record of a conference shared by other users.

### SUMMARY

In a first aspect of the present disclosure, a method for viewing media content is provided. The method includes: presenting, in a viewing interface of the media content, speaking time information of one or more speaking parties associated with the media content, the speaking time information indicating positions of speaking time periods of the one or more speaking parties in the media content; and presenting, in the viewing interface, speaking content information related to speaking content of the one or more speaking parties in association with the speaking time information.

In a second aspect of the present disclosure, an apparatus for viewing media content is provided. The apparatus includes: a time information presenting module, configured to present, in a viewing interface of the media content, speaking time information of one or more speaking parties associated with the media content, the speaking time information indicating positions of speaking time periods of the one or more speaking parties in the media content; and a speaking information presenting module, configured to present, in the viewing interface, speaking content information related to speaking content of the one or more speaking parties in association with the speaking time information.

In a third aspect of the present disclosure, an electronic device is provided. The device includes at least one processing unit; and at least one memory coupled to the at least one processing unit and storing instructions executable by the at least one processing unit. The instructions, when executed by the at least one processing unit, cause the device to perform the method of the first aspect.

In a fourth aspect of the present disclosure, a computer-readable storage medium is provided. The computer-readable storage medium stores a computer program executable by a processor to implement the method of the first aspect.

It should be understood that the summary described in this disclosure is not intended to limit key features or important features of implementations in the present disclosure, nor is it intended to limit the scope in the present disclosure. Other features in the present disclosure will become readily understood from the following description.

### BRIEF DESCRIPTION OF THE DRAWINGS

The above and other features, advantages, and aspects of the various embodiments in the present disclosure will become more apparent from the following detailed description taken in combination with the accompanying drawings. In the drawings, the same or similar reference numbers refer to the same or similar elements, where:
Fig. 1 is a schematic diagram of an example environment in which the embodiments of the present disclosure may be implemented;
Fig. 2A shows an example viewing interface for media content according to some embodiments of the present disclosure;
Figs. 2B to 2E show a portion of an example viewing interface for media content according to some embodiments of the present disclosure;
Fig. 3 shows an example viewing interface for media content according to some embodiments of the present disclosure;
Fig. 4 is a flowchart of a process of viewing media content according to some embodiments of the present disclosure;
Fig. 5 is a block diagram of an apparatus for viewing media content according to some embodiments of the present disclosure; and
Fig. 6 is a block diagram of a device capable of implementing a plurality of embodiments of the present disclosure.

### DETAILED DESCRIPTION OF EMBODIMENTS

It would be appreciated that before the technical solution disclosed in the embodiments in the present disclosure is used, users should be informed of the type, the scope of use, the use scenario, etc. of the personal information involved in the present disclosure in an appropriate manner and in accordance with relevant laws and regulations, and the authorization of the users may be obtained.

For example, in response to an active request being received from a user, a prompt message is sent to the user to explicitly prompt the user that the operation requested by the user would need acquisition and use of personal information of the user. As such, according to prompt information, users may choose whether to provide personal information to the software or hardware, such as an electronic device, application, server or storage medium, that performs the operations of the technical solution in the present disclosure.

As an optional but non-limiting implementation, in response to the active request being received from the user, the prompt information may be sent to the user via, for example, a pop-up window in which the prompt information may be presented in text. In addition, the pop-up window may also contain selection controls configured for the user to choose "agree" or "disagree" to provide the personal information to the electronic device.

- It would be appreciated that the above process of notification and acquisition of user authorization is only illustrative and does not limit the implementations in the present disclosure. Other methods that meet relevant laws and regulations may also be applied to the implementations in the present disclosure.

It may be understood that data involved in the technical solution (including but not limited to the data itself, acquisition or use of the data) should comply with requirements of corresponding laws, regulations, and related provisions.

The embodiments in the present disclosure will be described in more detail below with reference to the accompanying drawings. Although certain embodiments in the present disclosure are shown in the drawings, it would be appreciated that the present disclosure can be implemented in various forms and should not be interpreted as limited to the embodiments described in this specification. On the contrary, these embodiments are provided for a more thorough and complete understanding in the present disclosure. It would be appreciated that the accompanying drawings and embodiments in the present disclosure are only for the purpose of illustration and are not intended to limit the scope of protection in the present disclosure.

It should be noted that the headline of any section/subsection provided in the specification is not limiting. Various embodiments are described throughout the specification and any type of embodiments may be included in any section/subsection. Furthermore, the embodiments described in any section/subsection may be combined in any manner with any other embodiment described in the same section/subsection and/or different sections/subsections.

Unless explicitly stated herein, performing a step "in response to A" does not mean that the step is performed immediately after "A", but may include one or more intermediate steps.

In the description of the embodiments of the present disclosure, the term "including" and similar terms would be appreciated as open-ended inclusion, that is, "including but not limited to". The term "based on" would be appreciated as "at least partially based on". The term "one embodiment" or "the embodiment" would be appreciated as "at least one embodiment". The term "some embodiments" would be appreciated as "at least some embodiments". Other explicit and implicit definitions may also be included below. The terms "first," "second," and the like may refer to different or same objects. Other explicit and implicit definitions may also be included below.

### Example Environment

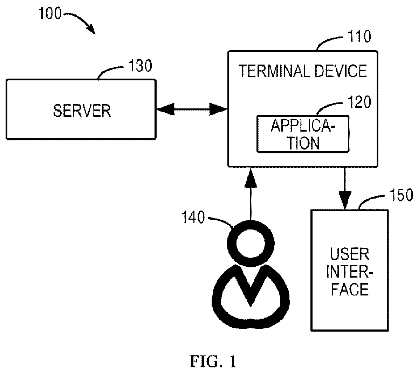

Fig. 1 is a schematic diagram of an example environment 100 in which the embodiments of the present disclosure may be implemented. In the example environment 100, an application 120 is installed on a terminal device 110. A user 140 may interact with the application 120 via the terminal device 110 and/or an attached device of the terminal device 110. In some embodiments, the application 120 may be an application that provides a single primary function, also referred to as a single-function application. In some embodiments, the application 120 may also be an integrated suite application that may provide a plurality of functions to the user 140. To this end, the suite application may include a plurality of components for implementing these functions, respectively. In such case, each component may be considered as corresponding to a sub-application. A suite application in the office field is sometimes also referred to as an "office application", a "cooperative office platform", and the like. As an example, the components integrated in the suite application may include, but are not limited to, one or more of the following: a chat component (also referred to as an instant messaging (IM) component), a document component, an audio and video conference component, an email component, a calendar component, a schedule component, a task component, and the like. In some embodiments, the suite application may also be downloaded and installed on the terminal device 110 as an application.

In the environment 100 of Fig. 1, if the application 120 is launched, the terminal device 110 may present an interface 150 of the application 120 to the user 140. The interface 150 may include entry controls and access entries for various components that may be provided by the application 120, and an interaction interface associated with the components, such as a conversation interface for presenting chat content, a video conference interface, a file sharing interface, and the like.

The interface 150 may include a viewing interface for media content, through which the user 140 may play the media content and view information associated with the media content. Such media content may be, for example, video or audio. In some embodiments, the media content may include an audio and video file stored locally on the terminal device 110, an audio and video file or an audio and video stream stored in the cloud (for example, on a server 130). Such an audio and video stream may include, for example, a playback stream of recorded media content (for example, a conference record) or a live stream of live content.

In some embodiments, the terminal device 110 communicates with the server 130 to enable the provision of services of the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a television receiver, a radio broadcast receiver, an e-book device, a gaming device, or any combination thereof, including the accessories and peripherals of these devices or any combination thereof. In some embodiments, the terminal device 110 may also support any type of user-specific interface (such as "wearable" circuit, etc.). The server 130 may be various types of computing systems/servers capable of providing computing power, including but not limited to mainframes, edge computing nodes, computing devices in cloud environments, and the like.

It would be appreciated that the structure and functions of the elements in the environment 100 are described for illustrative purposes only, without suggesting any limitation to the scope of the present disclosure.

As briefly mentioned above, people may play a video or audio record of a conference with a player or the like. In such a playback process, people may expect to locate a corresponding portion in such a video or audio recording of a specific speaking party (for example, a primary speaking party of the meeting or a speaking party of primary concern), and may expect to know speaking content of the specific speaking party. In a conventional solution, people need to view the complete text transcript regarding the meeting. This requires a relatively large amount of time, thereby reducing efficiency.

To this end, the embodiments of the present disclosure provide a solution for viewing media content. According to the embodiments of the present disclosure, speaking time information of one or more speaking parties associated with the media content is presented in a viewing interface of the media content to indicate positions of speaking time periods of the one or more speaking parties in the media content. Speaking content information related to speaking content of the one or more speaking parties is also presented in the viewing interface, which may be presented in association with the speaking time information. In this way, the speaking time and the speaking summary of the speaking party are presented to the user at the same time, thereby facilitating a quick understanding of the speaking content of the speaking party of interest. This may advantageously improve the efficiency of viewing the media content.

The embodiments of the present disclosure are described below with continued reference to the drawings.

### Example Viewing Interface

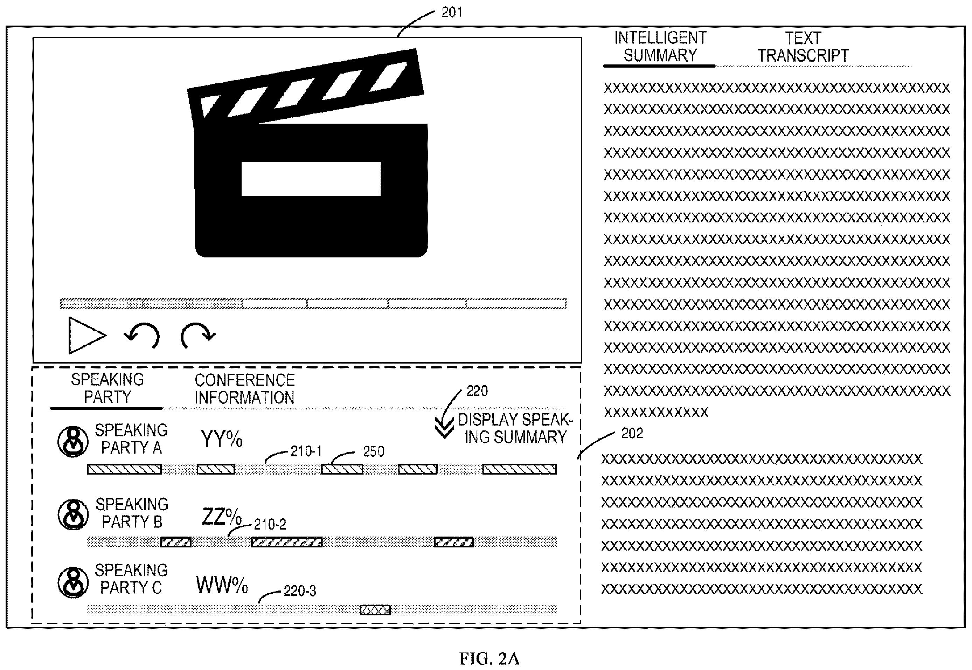

Fig. 2A shows an example of a viewing interface for media content, which may be presented by the terminal device 110, for example. The viewing interface includes area 201 for playing the media content. As mentioned above, the media content may be pre-recorded or being recorded. The media content may be, for example, video or audio. In some embodiments, the media content may be a media file for recording a conversation (for example, a conference).

The area 202 of the viewing interface presents information of one or more speaking parties (for example, speakers) associated with the media content. As shown in Fig. 2A, speaking time information of a speaking party A, a speaking party B, and a speaking party C is presented in the area 202 to indicate positions of respective speaking time periods of these speaking parties in the media content.

The speaking party associated with the media content described herein may refer to an entity that produces voice in the media content. For example, if the media content is a recording of a conversation, the speaking party may be a participant in the conversation. In some embodiments, one speaking party may include a plurality of speakers, for example, such a speaking party may be determined based on a terminal participating in an online conference. For example, if a plurality of conference participants accesses the online conference through the same terminal (or use the same account), such a plurality of participants may be regarded as the same speaking party, although it may include a plurality of different speakers. Alternatively, in some embodiments, one speaking party may correspond to one speaker. It would be appreciated that any appropriate speaker identification technology may be used to determine a corresponding speaker in the media content, which is not intended to be limited in the present disclosure.

In some embodiments, information of all speaking parties associated with the media content may be presented in the area 202. Alternatively, in some embodiments, information of a portion of the speaking parties associated with the media content may be presented in the area 202. For example, the user may choose which information of the speaking parties is to be present in the area 202. For another example, information of a certain number of speaking parties may be presented.

In some embodiments, the speaking time information may be presented to the user in the form of a timeline. For example, for a first speaking party, the terminal device 110 may present a first timeline of the media content and display a first speaking time period of the first speaking party in the first timeline in a first style. Correspondingly, for a second speaking party, the terminal device 110 may present a second timeline of the media content and display a second speaking time period of the second speaking party in the second timeline in a second style different from the first style. The timelines presented for the speaking parties (for example, the first timeline and the second timeline mentioned above) may be collectively referred to as speaking timelines.

Continuing with the example of Fig. 2A, a timeline 210-1 for the speaking party A, a timeline 220-2 for the speaking party B, and a timeline 220-3 for the speaking party C are displayed in the area 202, which are also collectively or individually referred to as a timeline 220. On each timeline 220, a speaking time period of the corresponding speaking party is highlighted, and the highlighting style is different for different speaking parties. In this way, the user may also intuitively know at which moments the speaking party did not speak and at which moments the speaking party spoke frequently. Such information is more helpful for the user to quickly obtain desired content.

Furthermore, the display style of the speaking time period shown in Fig. 2A is only illustrative and not intended to be limited. Different speaking parties may be distinguished in any suitable style, for example, a displayed color, a width of a displayed line, and the like.

Furthermore, representing the speaking time period with different timelines is only illustrative, and the speaking time information may be presented in any suitable manner and is not limited to being presented in the area 202. For example, the corresponding speaking time periods of each speaking party may be identified in different styles in a playback progress bar of the media content.

In some embodiments, the presented speaking timeline may further support various types of user interaction. As an example, if the terminal device 110 receives a selection of a position on a certain timeline, the terminal device 110 may start playing the media content from a moment corresponding to the selected position. For example, as shown in Fig. 2A, the user may click on a position 250 in the speaking timeline 210-1 to indicate that it is desired to start playing the media content from this position. Correspondingly, the terminal device 110 may start playing the media content from a time point corresponding to the position 250.

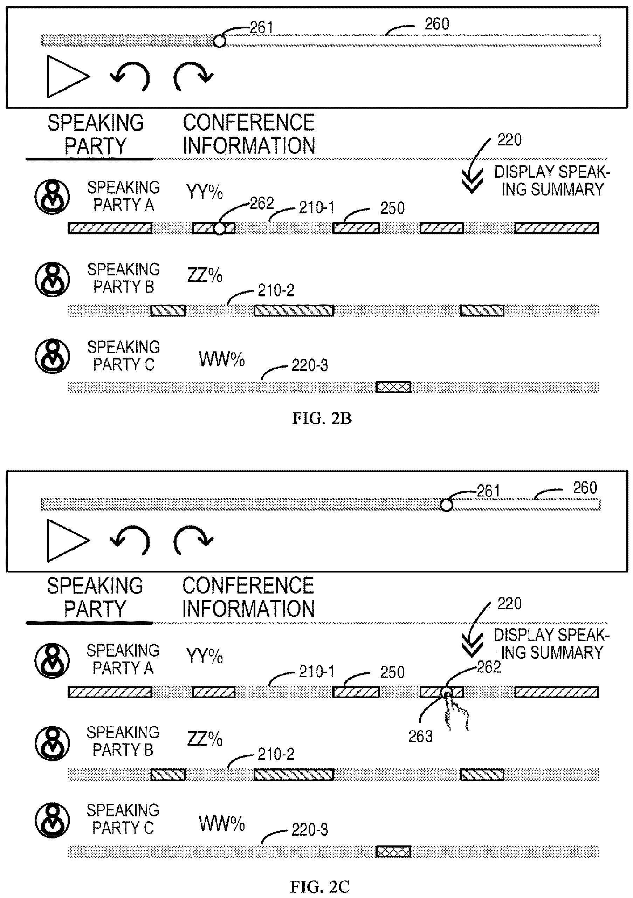

In some embodiments, a timeline presented in association with the media content, also referred to as a fourth timeline or a playback timeline, may be displayed in the viewing interface. A playback flag indicating a current playback moment is displayed on the playback timeline. It would be appreciated that the "current playback moment" indicates a moment corresponding to an image or a frame displayed in the media content display area, and the media content may be in a state of being played or paused. An example is described with reference to Fig. 2B. As shown in Fig. 2B, the playback timeline 260 is displayed in the viewing interface, and the playback flag 261 is displayed on the playback timeline 260. The current playback moment is within the speaking time period of the speaking party A. Correspondingly, a position flag 262 is displayed on the speaking timeline 210-1 of the speaking party A.

In some embodiments, the playback flag on the playback timeline may jump with a trigger on the speaking timeline. In response to the trigger (for example, the user clicks) on a first position on the speaking timeline, the playback flag may be displayed at a second position corresponding to the first position on the playback timeline. That is, the playback flag jumps.

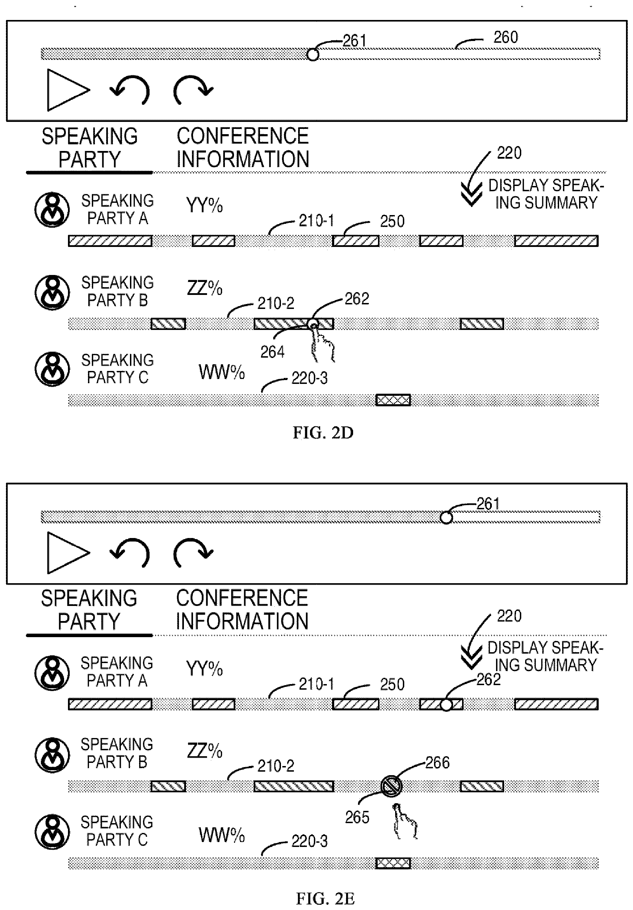

Comparing Fig. 2B with Fig. 2C, the user triggers (for example, clicks on) on a position 263 on the speaking timeline 210-1. Correspondingly, display positions of the playback flag 261 and the position flag 262 change. Another example is described with reference to Fig. 2D. The user triggers (for example, clicks on) on a position 264 on the speaking timeline 210-2. Correspondingly, the display position of the playback flag 261 changes. The position flag 262 is displayed on the speaking timeline 210-2, instead of the speaking timeline 210-1.

In some embodiments, whether a position in a speaking timeline is triggerable depends on whether a speaking party corresponding to the speaking timeline is speaking at a moment corresponding to the position. Specifically, a position located within a speaking time period of the speaking party on a speaking timeline corresponding to a speaking party is triggerable. For example, a position located within the speaking time period of the speaking party A on the speaking timeline 210-1 is triggerable, and a position located within the speaking time period of the speaking party B on the speaking timeline 210-2 is triggerable. For example, in the example of Fig. 2E, a position 265 on the speaking timeline 210-2 is not within the speaking time period of the speaking party B, and therefore is not triggerable. If the user tries to trigger this position, a prohibition sign 266 may be presented.

In some embodiments, the terminal device 110 may further present, in the viewing interface, speaking proportion information of the one or more speaking parties to indicate a proportion of the corresponding speaking time period of the one or more speaking parties relative to a duration of the media content. For example, in the example of Fig. 2A, proportions "YY%", "ZZ%", and "WW%" are displayed for the speaking party A, the speaking party B, and the speaking party C, respectively.

In some embodiments, a presentation sequence of the speaking timelines may be determined based on, for example, the speaking proportions of the speaking parties. For example, if a speaking proportion of the "speaking party A" reaches "70%", which is greater than a speaking proportion "30%" of the "speaking party B", the speaking timeline 210-1 may be presented prior to the speaking timeline 210-2, as shown in Fig. 2A.

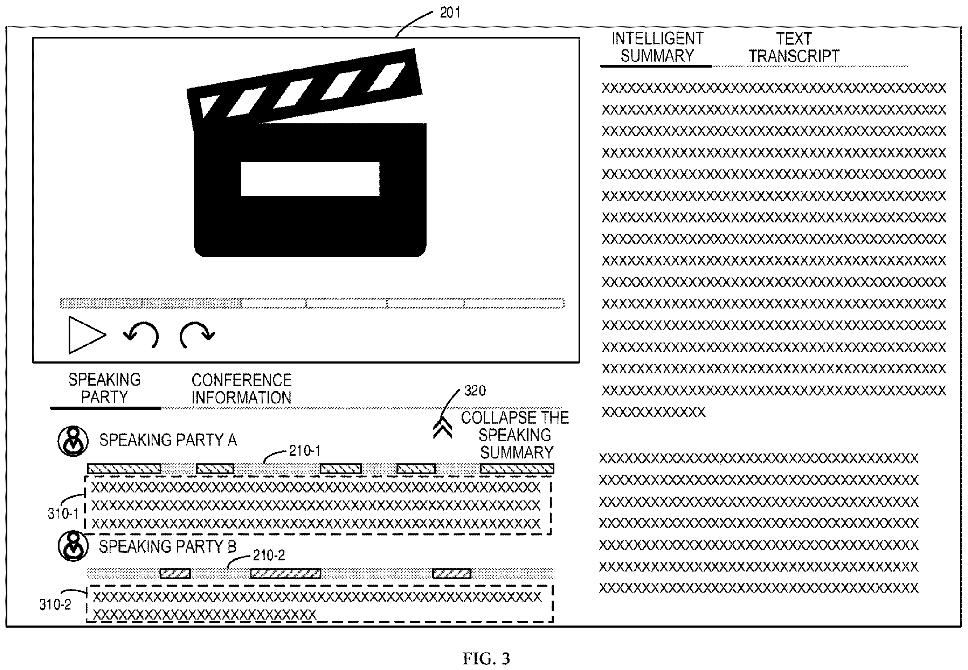

Referring to Fig. 3, it illustrates an example of a viewing interface for media content, which may be presented by the terminal device 110, for example. In the viewing interface, speaking content information related to speaking content of the speaking party is presented. The speaking content information may include any suitable information related to the speaking content of the speaking party. For example, the speaking content information of a certain speaking party may include important speaking content or an excerpt of the speaking content of the speaking party. In some embodiments, the speaking content information may include speaking summary information to summarize the speaking content of the one or more speaking parties. For example, a speaking summary of the speaking content may be presented for each speaking party.

The speaking content information may be presented in association with the speaking time information. For example, the speaking content information of each speaking party may be presented in association with the speaking time information of the speaking party. Specifically, Fig. 3 shows speaking content information 310-1 of the speaking party A and speaking content information 310-2 of the speaking party B, which are also collectively or individually referred to as speaking content information 310. It would be appreciated that due to a limitation in the area of the display region of the interface, the speaking content information of the speaking party C may be displayed by scrolling the screen or the like.

In some embodiments, the speaking content information of each speaking party may be presented adjacent to the speaking timeline of the speaking party. For example, as shown in Fig. 3, the speaking content information 310-1 of the speaking party A is adjacent to the speaking timeline 210-1, specifically below the speaking timeline 210-1. The speaking content information 310-2 of the speaking party B is adjacent to the speaking timeline 210-2, specifically below the speaking timeline 210-2.

In some embodiments, the speaking content information may be presented by default in the viewing interface. In some embodiments, the speaking content information may be presented in response to a user input. For example, a first control for displaying the speaking content information may be presented in the viewing interface. If the first control is triggered by the user, the terminal device 110 may present the speaking content information in the viewing interface. For example, the first control 220 is shown in Fig. 2A. In response to the user clicking on the first control 220, the speaking content information 310 shown in Fig. 3 is presented.

In some embodiments, in response to the presentation of the speaking content information, the terminal device 110 may present a second control for hiding the speaking content information in the viewing interface. If the second control is triggered by the user, the presentation of the speaking content information in the viewing interface may be stopped. For example, after the speaking summary 310 is presented, the first control 220 in Fig. 2A is converted to the second control 320 shown in Fig. 3. If the user clicks on the second control 320, the speaking content information 310 may be collapsed.

In the example described above, the control for presenting and hiding the speaking content information is shared by different speaking parties. In some other examples, a separate control may be provided for each speaking party to present and hide the speaking content information of the speaking party. In this way, the user may know the speaking content of the speaking party of interest.

In some embodiments, the speaking time period of the speaking party may include a plurality of sub-time periods. Correspondingly, it is possible to present speaking content information, for example, a speaking summary, related to speaking content within at least one of the sub-time periods. Such a sub-time period may be any sub-time period, or may be a time period whose length exceeds a threshold length. For example, as shown in the timeline 210-1 for the speaking party A, the speaking time period of the speaking party A includes a plurality of sub-time periods. If a length of one or more of the time periods exceeds a threshold, a summary of the speaking content of such a time period may be presented. In this way, the user may know the speaking content of the speaking party at a refined time granularity, thereby locating the speaking content of interest or concern more accurately.

In some embodiments, a speaking content summary corresponding to the sub-time period may be presented. In such an embodiment, if the speaking content summary is selected, a position flag may be presented at the sub-time period corresponding to the selected speaking content summary on the speaking timeline of the speaking party. Therefore, it may further facilitate the viewing of the speaking content of concern or interest.

It would be appreciated that, for the purpose of description only, the example of the viewing interface is discussed above in conjunction with Figs. 2A to 3, but various aspects discussed above (for example, provision of the speaking timeline, style of the speaking timeline, interaction of the speaking timeline, style of the control, presentation position of each element, etc.) may be provided independently or in a combination different from that shown in Fig. 2A to Fig. 3.

Furthermore, although the examples shown in Figs. 2A to 3 are for the review of recorded content, the embodiments of the present disclosure may also be used to view real-time media content (for example, live audio and video streams). Correspondingly, the speaking timeline discussed above may indicate, for example, a temporal distribution of historical speaking content of at least one speaking party associated with a historical part of the real-time media content.

### Example Process

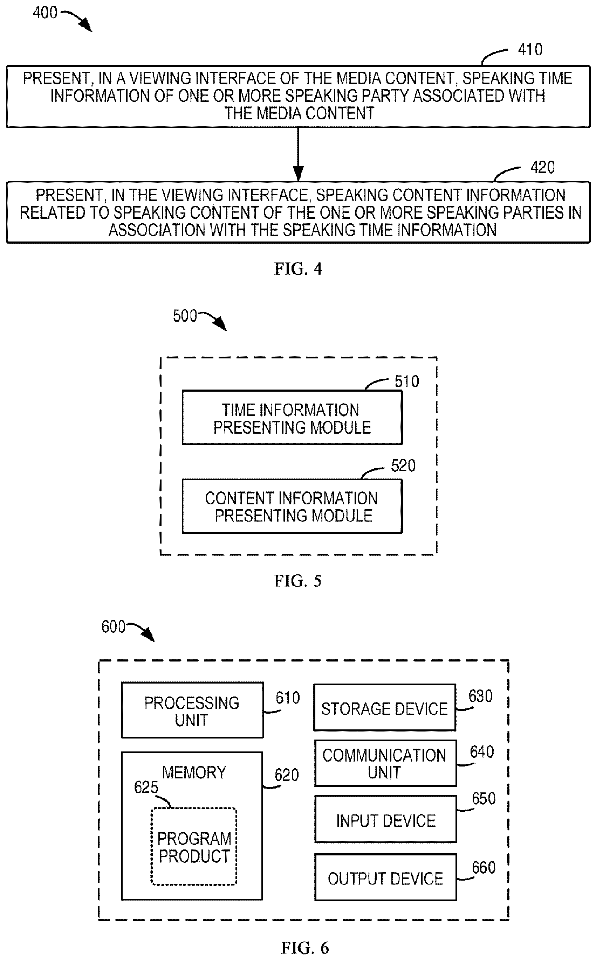

Fig. 4 is a flowchart of a process 400 of viewing media content according to some embodiments of the present disclosure. The process 400 may be implemented at the terminal device 110. The process 400 is described below with reference to the figure.

At block 410, the terminal device 110 presents, in a viewing interface of the media content, speaking time information of one or more speaking parties associated with the media content. The speaking time information indicates positions of speaking time periods of the one or more speaking parties in the media content.

At block 410, the terminal device 110 presents, in the viewing interface, speaking content information related to speaking content of the one or more speaking parties in association with the speaking time information.

In some embodiments, the one or more speaking parties include a first speaking party and a second speaking party, and presenting the speaking time information of the one or more speaking parties includes: presenting a first timeline of the media content for the first speaking party, a first speaking time period of the first speaking party being displayed in the first timeline in a first style; and presenting a second timeline of the media content for the second speaking party, a second speaking time period of the second speaking party being displayed in the second timeline in a second style different from the first style.

In some embodiments, the process 400 further includes: receiving a selection of a position in the first timeline; and starting to play the media content from a moment corresponding to the selected position.

In some embodiments, presenting the speaking content information in association with the speaking time information includes: presenting first speaking content information of the first speaking party adjacent to the first timeline; and presenting second speaking content information of the second speaking party adjacent to the second timeline.

In some embodiments, the process 400 further includes: presenting, in the viewing interface, speaking proportion information of the one or more speaking parties, the speaking proportion information indicating a proportion of corresponding speaking time period of the one or more speaking parties relative to a duration of the media content.

In some embodiments, presenting the speaking content information of the one or more speaking parties includes: presenting, in the viewing interface, a first control for displaying the speaking content information; and presenting, in the viewing interface, the speaking content information in response to a trigger on the first control.

In some embodiments, the process 400 further includes: presenting, in the viewing interface, a second control for hiding the speaking content information in response to the presentation of the speaking content information; and stopping the presentation of the speaking content information in the viewing interface in response to a trigger on the second control.

In some embodiments, a speaking time period of a third speaking party of the one or more speaking parties includes a plurality of sub-time periods, and presenting the speaking content information includes: presenting, for at least one of the plurality of sub-time periods, third speaking content information related to speaking content of the third speaking party within the at least one sub-time period.

In some embodiments, presenting the third speaking content information includes: presenting at least one speaking content summary respectively corresponding to the at least one sub-time period. The process 400 further includes: presenting, in response to selecting a speaking content summary from the at least one speaking content summary, a position flag at a sub-time period on a third timeline corresponding to the selected speaking content summary, the third timeline indicating the speaking time period of the third speaking party.

In some embodiments, a fourth timeline presented in association with the media content is displayed in the viewing interface, a playback flag indicating a current playback moment is displayed on the fourth timeline, and the method further includes: displaying, on the fourth timeline, the playback flag at a second position corresponding to a first position in response to a trigger on the first position in the first timeline or the second timeline.

In some embodiments, a position located within the first speaking time period on the first timeline is triggerable, and a position within the second speaking time period on the second timeline is triggerable.

### Example Apparatus and Device

Fig. 5 is a schematic structural block diagram of an apparatus 500 for viewing media content according to some embodiments of the present disclosure. The apparatus 500 may be implemented as or included in the terminal device 110. Each module/component in the apparatus 500 may be implemented by hardware, software, firmware, or any combination thereof.

As shown in the figure, the apparatus 500 includes a time information presenting module 510 configured to present, in a viewing interface of the media content, speaking time information of one or more speaking parties associated with the media content, the speaking time information indicating positions of corresponding speaking time periods of the one or more speaking parties in the media content. The apparatus 500 further includes a content information presenting module 520 configured to present speaking content information related to speaking content of the one or more speaking parties in association with the speaking time information.

In some embodiments, the one or more speaking parties include a first speaking party and a second speaking party, and the time information presenting module 510 is further configured to: present a first timeline of the media content for the first speaking party, a first speaking time period of the first speaking party being displayed in the first timeline in a first style; and present a second timeline of the media content for the second speaking party, a second speaking time period of the second speaking party being displayed in the second timeline in a second style different from the first style.

In some embodiments, the apparatus 500 further includes: a selection receiving module configured to receive a selection of a position in the first timeline; and a content playing module configured to start playing the media content from a moment corresponding to the selected position.

In some embodiments, the content information presenting module 520 is further configured to: present a first speaking summary of the first speaking party adjacent to the first timeline; and present a second speaking summary of the second speaking party adjacent to the second timeline.

In some embodiments, the apparatus 500 further includes a proportion information presenting module configured to present, in the viewing interface, speaking proportion information of the one or more speaking parties, the speaking proportion information indicating a proportion of corresponding speaking time period of the one or more speaking parties relative to a duration of the media content.

In some embodiments, the content information presenting module 520 is further configured to: present, in the viewing interface, a first control for displaying the speaking content information; and present, in the viewing interface, the speaking content information in response to a trigger on the first control.

In some embodiments, the content information presenting module 520 is further configured to: present, in the viewing interface, a second control for hiding the speaking content information in response to the presentation of the speaking content information; and stop presenting the speaking content information in the viewing interface in response to a trigger on the second control.

In some embodiments, a speaking time period of a third speaking party of the one or more speaking parties includes a plurality of sub-time periods. The speaking information presenting module 520 is further configured to: present, for at least one of the plurality of sub-time periods, third speaking content information related to speaking content of the third speaking party within the at least one sub-time period.

In some embodiments, the speaking information presenting module 520 is further configured to present at least one speaking content summary respectively corresponding to the at least one sub-time period. The apparatus 500 further includes a position flag presenting module configured to present, in response to selecting a speaking content summary from the at least one speaking content summary, a position flag at a sub-time period on a third timeline corresponding to the selected speaking content summary. The third timeline indicates the speaking time period of the third speaking party.

In some embodiments, a fourth timeline presented in association with the media content is displayed in the viewing interface, a playback flag indicating a current playback moment is displayed on the fourth timeline. The apparatus 500 further includes: a playback flag displaying module configured to display, on the fourth timeline, the playback flag at a second position corresponding to a first position in response to a trigger on the first position in the first timeline or the second timeline.

In some embodiments, a position located within the first speaking time period on the first timeline is triggerable, and a position within the second speaking time period on the second timeline is triggerable.

FIG. 6 illustrates a block diagram of an electronic device 600 in which one or more embodiments in the present disclosure may be implemented. It would be appreciated that the electronic device 600 illustrated in FIG. 6 is merely illustrative and should not constitute any limitation on the functionality and scope of the embodiments described herein. The electronic device 600 shown in FIG. 6 may be configured to implement the electronic device 110 in FIG. 1.

As shown in FIG. 6, the electronic device 600 is in the form of a general-purpose electronic device. Components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor capable of performing various processes according to a program stored in the memory 620. In a multiprocessor system, a plurality of processing units executes computer-executable instructions in parallel to improve the parallel processing capabilities of electronic device 600.

The electronic device 600 typically includes a variety of computer storage media. Such media may be any available media that are accessible to the electronic device 600, including, but not limited to, volatile and non-volatile media, removable and non-removable media. The memory 620 may be a volatile memory (e.g., a register, cache, random access memory (RAM)), non-volatile memory (e.g., read-only memory (ROM), electrically erasable programmable read-only memory (EEPROM), flash memory), or some combination thereof. The storage device 630 may be a removable or non-removable medium and may include a machine-readable medium, such as a flash drive, magnetic disk, or any other medium that can be used to store information and/or data and that can be accessed within the electronic device 600.

The electronic device 600 may further include an additional removable/non-removable, volatile/non-volatile storage medium. Although not shown in FIG. 6, a disk drive for reading from or writing to a removable, non-volatile magnetic disk (e.g., a "floppy disk") or an optical disk drive for reading from or writing to a removable, non-volatile optical disk may be provided. In these cases, each drive may be connected to a bus (not shown) by one or more data media interfaces. The memory 620 may include a computer program product 625 having one or more program modules configured to execute various methods or actions of the various embodiments in the present disclosure.

The communication unit 640 is configured to communicate with other electronic devices through a communication medium. Additionally, the functionality of components of the electronic device 600 may be implemented by a single computing cluster or multiple computing machines capable of communicating through a communication connection. Thus, the electronic device 600 may operate in a networked environment using a logical connection with one or more other servers, network personal computers (PCs), or another network node.

The input device 650 may be one or more input devices such as a mouse, a keyboard, a trackball, or the like. The output device 660 may be one or more output devices, such as a display, a speaking party, a printer, or the like. The electronic device 600 may also communicate with one or more external devices (not shown) through the communication unit 640 as needed. The external device, such as a storage device, a display device, etc., communicates with one or more devices that enable users to interact with the electronic device 600, or communicates with any device (e.g., a network card, a modem, etc.) that enables the electronic device 600 to communicate with one or more other electronic devices. Such communication may be performed via an input/output (I/O) interface (not shown).

According to example implementations in the present disclosure, a computer-readable storage medium having computer-executable instructions stored thereon is provided. The computer-executable instructions are executed by a processor to implement the method described above. According to example implementations in the present disclosure, a computer program product is further provided. The computer program product is tangibly stored on a non-transitory computer-readable medium and includes computer-executable instructions. The computer-executable instructions are executed by a processor to implement the method described above.

Various aspects in the present disclosure are described herein with reference to flowcharts and/or block diagrams of methods, apparatuses, devices, and computer program products implemented according to the present disclosure. It would be appreciated that each block of the flowchart and/or block diagram, and combinations of blocks in the flowcharts and/or block diagrams, may be implemented by computer readable program instructions.

These computer-readable program instructions may be provided to a processing unit of a general-purpose computer, special computer, or other programmable data processing apparatus to produce a machine that generates an apparatus to implement the functions/acts specified in one or more blocks in the flowchart and/or the block diagram when these instructions are executed through the processing units of the computer or other programmable data processing devices. These computer-readable program instructions may also be stored in a computer-readable storage medium. These instructions cause the computer, programmable data processing apparatus, and/or other devices to work in a specific way. Therefore, the computer-readable medium storing instructions includes an article of manufacture including instructions to implement aspects of the functions/acts specified in one or more blocks in the flowchart and/or block diagram(s).

The computer-readable program instructions may be loaded onto a computer, a programmable data processing apparatus, or a further device, such that a series of operational steps can be performed on the computer, programmable data processing apparatus, or the further device to produce a computer-implemented process. As such, the instructions executed on the computer, programmable data processing apparatus, or the further device implement the functions/acts specified in the one or more blocks in the flowchart and/or block diagram(s).

The flowchart and block diagrams in the drawings show the possible architecture, functions and operations of the system, the method, and the computer program product implemented according to various implementations in the present disclosure. In this regard, each block in the flowchart or block diagram may represent a part of a module, a program segment or instructions, which contains one or more executable instructions for implementing the specified logic function(s). In some alternative implementations, the functions marked in the blocks may also occur in a different order from those marked in the drawings. For example, two consecutive blocks may be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by a combination of a dedicated hardware and computer instructions.

Various implementations in the present disclosure have been described above. The above description is illustrative, not exhaustive, and the present application is not limited to the disclosed implementations. Without departing from the scope and spirit of the described implementations, many modifications and changes are obvious to those skilled in the art. The terminology used herein has been chosen to best explain the principles of the respective implementations, the practical applications or improvements to the technology in the marketplace, or to enable those skilled in the art to understand the implementations disclosed herein.

## Claims

1. A method for viewing media content, comprising:
presenting, in a viewing interface of the media content, speaking time information of one or more speaking parties associated with the media content, the speaking time information indicating positions of speaking time periods of the one or more speaking parties in the media content; and
presenting, in the viewing interface, speaking content information related to speaking content of the one or more speaking parties in association with the speaking time information.

2. The method of claim 1, wherein the one or more speaking parties comprise a first speaking party and a second speaking party, and presenting the speaking time information of the one or more speaking parties comprises:
presenting a first timeline of the media content for the first speaking party, a first speaking time period of the first speaking party being displayed in the first timeline in a first style; and
presenting a second timeline of the media content for the second speaking party, a second speaking time period of the second speaking party being displayed in the second timeline in a second style different from the first style.

3. The method of claim 2, further comprising:
receiving a selection of a position in the first timeline; and
starting to play the media content from a moment corresponding to the selected position.

4. The method of claim 2, wherein presenting the speaking content information in association with the speaking time information comprises:
presenting first speaking content information of the first speaking party adjacent to the first timeline; and
presenting second speaking content information of the second speaking party adjacent to the second timeline.

5. The method of claim 1, further comprising:
presenting, in the viewing interface, speaking proportion information of the one or more speaking parties, the speaking proportion information indicating a proportion of corresponding speaking time period of the one or more speaking parties relative to a duration of the media content.

6. The method of claim 1, wherein presenting the speaking content information of the one or more speaking parties comprises:
presenting, in the viewing interface, a first control for displaying the speaking content information; and
presenting, in the viewing interface, the speaking content information in response to a trigger on the first control.

7. The method of claim 6, further comprising:
presenting, in the viewing interface, a second control for hiding the speaking content information in response to the presentation of the speaking content information; and
stopping the presentation of the speaking content information in the viewing interface in response to a trigger on the second control.

8. The method of claim 1, wherein a speaking time period of a third speaking party of the one or more speaking parties comprises a plurality of sub-time periods, and presenting the speaking content information comprises:
presenting, for at least one of the plurality of sub-time periods, third speaking content information related to speaking content of the third speaking party within the at least one sub-time period.

9. The method of claim 8, wherein presenting the third speaking content information comprises:
presenting at least one speaking content summary respectively corresponding to the at least one sub-time period, and
wherein the method further comprises:
presenting, in response to selecting a speaking content summary from the at least one speaking content summary, a position flag at a sub-time period on a third timeline corresponding to the selected speaking content summary, the third timeline indicating the speaking time period of the third speaking party.

10. The method of claim 2, wherein a fourth timeline presented in association with the media content is displayed in the viewing interface, a playback flag indicating a current playback moment is displayed on the fourth timeline, and the method further comprises:
displaying, on the fourth timeline, the playback flag at a second position corresponding to a first position in response to a trigger on the first position in the first timeline or the second timeline.

11. The method of claim 10, wherein a position located within the first speaking time period on the first timeline is triggerable, and a position within the second speaking time period on the second timeline is triggerable.

12. An apparatus for viewing media content, comprising:
a time information presenting module, configured to present, in a viewing interface of the media content, speaking time information of one or more speaking parties associated with the media content, the speaking time information indicating positions of speaking time periods of the one or more speaking parties in the media content; and
a speaking information presenting module, configured to present, in the viewing interface, speaking content information related to speaking content of the one or more speaking parties in association with the speaking time information.

13. An electronic device, comprising:
at least one processing unit; and
at least one memory coupled to the at least one processing unit and storing instructions executable by the at least one processing unit, the instructions, when executed by the at least one processing unit, causing the electronic device to perform the method of any of claims 1 to 11.

14. A computer-readable storage medium having a computer program stored thereon, the computer program being executable by a processor to implement the method of any of claims 1 to 11.
